Europäisches Patentamt

European Patent Office

Office européen des brevets

(19)

(11) Veröffentlichungsnummer: **0 276 420**
**B1**

(12) **EUROPÄISCHE PATENTSCHRIFT**

(45) Veröffentlichungstag der Patentschrift:
**25.07.90**

(51) Int. Cl.⁵: **F16C 11/06**

(21) Anmeldenummer: **87118042.8**

(22) Anmeldetag: **07.12.87**

(54) **Kugelgelenk.**

(30) Priorität: **27.01.87 DE 3702277**

(43) Veröffentlichungstag der Anmeldung:
**03.08.88 Patentblatt 88/31**

(45) Bekanntmachung des Hinweises auf die Patenterteilung:
**25.07.90 Patentblatt 90/30**

(84) Benannte Vertragsstaaten:
**DE FR GB IT**

(56) Entgegenhaltungen:
**EP-A- 0 144 775**
**FR-A- 2 487 457**
**US-A- 3 175 834**
**US-A- 3 820 907**

(73) Patentinhaber: **TRW Ehrenreich GmbH & Co. KG,
Hansa-Allee 190, D-4000 Düsseldorf 11(DE)**

(72) Erfinder: **Glatzel, Michael, Weselerstrasse 17,
D-4000 Düsseldorf 1(DE)**

(74) Vertreter: **Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der Erfindung ist ein Kugelgelenk für Übertragungsgestänge in Kraftfahrzeugen mit in ein Gelenkgehäuse eingesetzten Lagerschalen, in denen ein Kugelzapfen drehbar und zwischen Anschlägen der inneren Lagerschalenhälfte schwenkbar gelagert ist.

In manchen Einsatzfällen sind Kugelgelenke in Übertragungsgestängen von Kraftfahrzeugen der Gefahr ausgesetzt, daß der Zapfenhals gegen den Rand seiner Durchtrittsöffnung im Gelenkgehäuse stößt und dieses beschädigt bzw. zerstört. Beispielsweise ist es bei hydraulisch betriebenen Servolenkungen üblich, daß die Längsachse des Arbeitszylinders und die Spurstange nicht in einer Ebene verlaufen. Bei Betätigung des Arbeitszylinders wird demzufolge ein zusätzliches Drehmoment auf die Spurstange ausgeübt, welches die Gelenkgehäuse der an den Enden der Spurstange befindlichen und mit Lenkhebeln verbundenen Kugelgelenke relativ zum Kugelzapfen verdreht. Dabei können die Ränder der Durchtrittsöffnungen für den Kugelzapfen gegen den Kugelzapfenhals schlagen. Hierdurch kann das aus duktilem oder sprödem metallischem Werkstoff bestehende Gelenkgehäuse beschädigt oder zerstört werden.

Zur Lösung des vorstehend beschriebenen Problems ist aus der DE-A 3 000 764 ein Kugelgelenk für Spurstangen bekannt geworden, bei dem ein Kugelzapfen mit einem mehrteilig ausgebildeten Kugelkopf drehbar und lediglich um eine zur Spurstangenachse senkrechte Achse schwenkbar gelagert ist. Hierzu besteht der Kugelkopf aus einer am Kugelzapfen ansetzenden Kugelkalotte mit einer eingesetzten Kugel und einer mit einer Kugelkalotte für die Kugel versehenen Lagerschalenhälfte, deren freie, innere Stirnseiten als Anschläge ausgebildet sind, die mit einer ringförmigen Stirnfläche der Kugelkalotte am Kugelzapfen zusammenwirken. Bei diesem bekannten Kugelgelenk mit einem mehrteilig ausgebildeten Kugelkopf muß die Zentrierung genau in einer Achse erfolgen, damit es beim bestimmungsgemäßen Gebrauch nicht zu Verzwängungen kommt. Außerdem hat dieses bekannte Kugelgelenk verhältnismäßig kleine Lagerflächen, in denen es beim bestimmungsgemäßen Gebrauch zu hohen Flächenpressungen kommt.

Davon ausgehend liegt der Erfindung die Aufgabe zugrunde, ein verbessertes Kugelgelenk mit Ausschlagbegrenzung zu schaffen.

Zur technischen Lösung dieser Aufgabe wird ein Kugelgelenk vorgeschlagen, bei dem der einteilig ausgebildete Kugelkopf einen am Kugelzapfen ansetzenden Kugelabschnitt mit kleinerem Radius und einen inneren Kugelabschnitt mit größerem Radius hat, die beiden Radien den gleichen Mittelpunkt haben, der größere Kugelabschnitt in einer inneren Lagerschalenhälfte gelagert ist und ein zwischen den beiden Kugelabschnitten ausgebildeter, ringförmiger Absatz mit der äußeren Lagerschalenhälfte des kleineren Kugelabschnittes als Anschlag zusammenwirkt.

Bei einem nach dieser technischen Lehre ausgebildeten Kugelgelenk ist der Kugelkopf einteilig ausgebildet. Infolgedessen hat das erfindungsgemäße Kugelgelenk im Vergleich zum Stand der Technik den Vorteil einer vereinfachten Konstruktion. Die Drehbarkeit bzw. Schwenkbarkeit des pilzförmig ausgebildeten Kugelkopfes wird dadurch gewährleistet, daß die unterschiedlichen Radien der Kugelabschnitte einen gemeinsamen Mittelpunkt aufweisen. Der zwischen den Kugelabschnitten ausgebildete Absatz ist zwischen den Lagerschalenhälften schwenkbar, wobei die Schwenkbarkeit von der Stirnseite der den Kugelabschnitt mit dem kleineren Radius aufnehmenden Lagerschalenhälfte begrenzt ist. Die Schwenkbarkeit des Kugelzapfens wird von dem Abstand des Absatzes des in Mittellage befindlichen Kugelzapfens von der Stirnseite der äußeren Lagerschalenhälfte für den kleineren Kugelabschnitt bestimmt. Dieser Abstand kann auch entlang des Umfanges der den Anschlag bildenden Lagerschalenhälfte variieren, so daß je nach Schwenkrichtung des Kugelzapfens unterschiedliche maximale Ausschlagwinkel entstehen. Dies kann beispielsweise dadurch erreicht werden, daß von einer ebenen Stirnfläche der als Anschlag dienenden Lagerschalenhälfte zu einer profilierten Stirnfläche übergegangen wird. Dann muß jedoch dafür Sorge getragen werden, daß diese Lagerschalenhälfte unverdrehbar im Gelenkgehäuse befestigt ist.

Ein erfindungsgemäß ausgebildetes Kugelgelenk hat im Vergleich zum Stand der Technik den weiteren Vorteil verhältnismäßig großer Lager- und Anschlagflächen, so daß auch nur vertretbare Flächenpressungen entstehen, die mit dem Werkstoff der Lagerschalen beherrscht werden müssen. Beim Ausschwenken des Kugelzapfens bis zu den Anschlägen entstehende Stöße werden von den Lagerschalenhälften elastisch aufgefangen, weil diese aus einem elastischen Kunststoff, beispielsweise Polyurethan oder Polyoxymethylen bestehen. Schließlich ist auch eine ausreichende Versorgung der Gleitbereiche mit Schmiermittel gewährleistet, insbesondere wenn der Kugelzapfen beim Aufliegen des Absatzes auf den Anschlägen der inneren Lagerschalenhälfte verdreht wird, weil die Stirnseite im Mittelbereich der Gleitzone des Kugelkopfes verläuft.

Bei einer praktischen Ausführungsform ist es auch möglich, die Anschläge bildende Stirnseite der äußeren Lagerschalenhälfte so auszubilden, daß der Kugelzapfen lediglich in einer Ebene schwenkbar ist. Hierzu ist bei einer Ausgestaltung der Erfindung vorgesehen, daß der Absatz des Kugelkopfes in zwei um 180° versetzten Auflagebereichen auf der Stirnseite der Anschläge bildenden Lagerschalenhälfte aufsitzt und daß die Stirnseite in den Auflagebereichen einen Krümmungsradius um eine Schwenkachse des Kugelzapfens hat, der gleich dem Abstand der Schwenkachse vom Absatz ist.

Bei dieser Ausgestaltung verläuft die Schwenkebene des Kugelzapfens senkrecht zu der Verbindungslinie der um 180° versetzten Auflagebereiche für den Absatz des Kugelkopfes. Damit der Absatz beim Schwenken des Kugelkopfes um die Schwenkachse an den Auflagebereichen abwälzbar ist, weisen diese etwa einen Krümmungsradius auf, der gleich dem Abstand der Schwenkachse von dem Absatz ist. Dieser Abstand verändert sich nämlich beim Schwenken des Kugelzapfens um seine Schwenkachse nicht, so daß der Absatz um einen Auflagebereich mit einer diesem Abstand entsprechenden Krümmung in einer Ebene schwenkbar ist. Die Schwenkbewegung des Kugelzapfens wird von den zwangsläufig vorhandenen Bereichen der Stirnseite der die Auflagebereiche aufweisenden Lagerschalenhälfte begrenzt, welche nicht den vorbeschriebenen Krümmungsradius aufweisen.

Bei einer weiteren Ausgestaltung gehen die einen Krümmungsradius aufweisenden Auflagebereiche der Stirnseiten der Anschläge bildenden Lagerschalenhälfte in sich tangential anschließende Anschlagebenen über. Auf diese Weise ist sichergestellt, daß der Absatz großflächig an den Anschlägen aufliegt, so daß die Krafteinleitung in die Lagerschalenhälfte günstiger ist und lokale Spannungsspitzen vermieden werden.

Bei einer weiteren Ausgestaltung ist zumindest eine Lagerschalenhälfte in Zapfenachsrichtung über eine oder mehrere Federn am Gelenkgehäuse abgestützt. Die Feder wird bei der Montage des Kugelgelenkes vorgespannt und vermag Fertigungstoleranzen der Bauteile des Kugelgelenkes und Verschleiß insbesondere durch Abnutzung der Lagerflächen auszugleichen. Darüber hinaus tragen eine oder mehrere Federn zum elastischen Abfangen von Stößen beim Auftreffen des Absatzes auf einem Anschlag bei, indem durch eine geringfügige Lageverschiebung der abgefederten Lagerschalenhälfte eine weitere Bewegung des Kugelzapfens entgegen der Federkraft ermöglicht wird. Die Feder kann beispielsweise eine Spriralfeder sein, welche sich am Gehäusedeckel oder Gehäuseboden und der den Gehäusedeckel oder Gehäuseboden benachbarten Lagerschalenhälfte abstützt.

Die Federn können aber auch von sich am Gehäusedeckel oder Gehäuseboden abstützenden Erhebungen gebildet werden, die sich radial auf der dem Gehäusedeckel oder Gehäuseboden benachbarten Lagerschalenhälfte erstrecken, woduch eine zusätzliche Feder eingespart wird. Die mit Erhebungen versehene Lagerschalenhälfte wird vorzugsweise aus einem weichelastischen Kunststoff, insbesondere Polyurethan hergestellt.

Bei einer weiteren Ausgestaltung grenzen an die Erhebungen der dem Gehäusedeckel oder Gehäuseboden benachbarten Lagerschalenhälfte radial verlaufende Schlitze an, zwischen denen starre Anschläge ausgebildet sind. Hierdurch wird eine Überlastung der Erhebungen durch axiales Zusammendrücken vermieden. Die seitliche Ausbauchung der Erhebungen wird nämlich von den Begrenzungswänden der Schlitze begrenzt, was deren seitliches Ausknicken und eine progressiv ansteigende Federkraft verursacht. Wenn die Erhebungen vollständig in die Schlitze eingetaucht sind, kommen die starren Anschläge zur Anlage und stoppen eine weitere Verformung der Erhebungen, so daß diese nicht beschädigt werden können.

Weitere Einzelheiten und Vorteile ergeben sich aus der nachfolgenden Beschreibung der zugehörigen Zeichnung, in denen ein erfindungsgemäßes Kugelgelenk dargestellt worden ist. In der Zeichnung zeigt:

Fig. 1 ein Kugelgelenk in Vorderansicht mit teilweise geschnittenem Gelenkgehäuse;
Fig. 2 dasselbe Kugelgelenk als perspektivisches Sprengbild;
Fig. 3 eine Lagerschalenhälfte desselben Kugelgelenkes entlang der Linie III-III der Fig. 2 geschnitten.

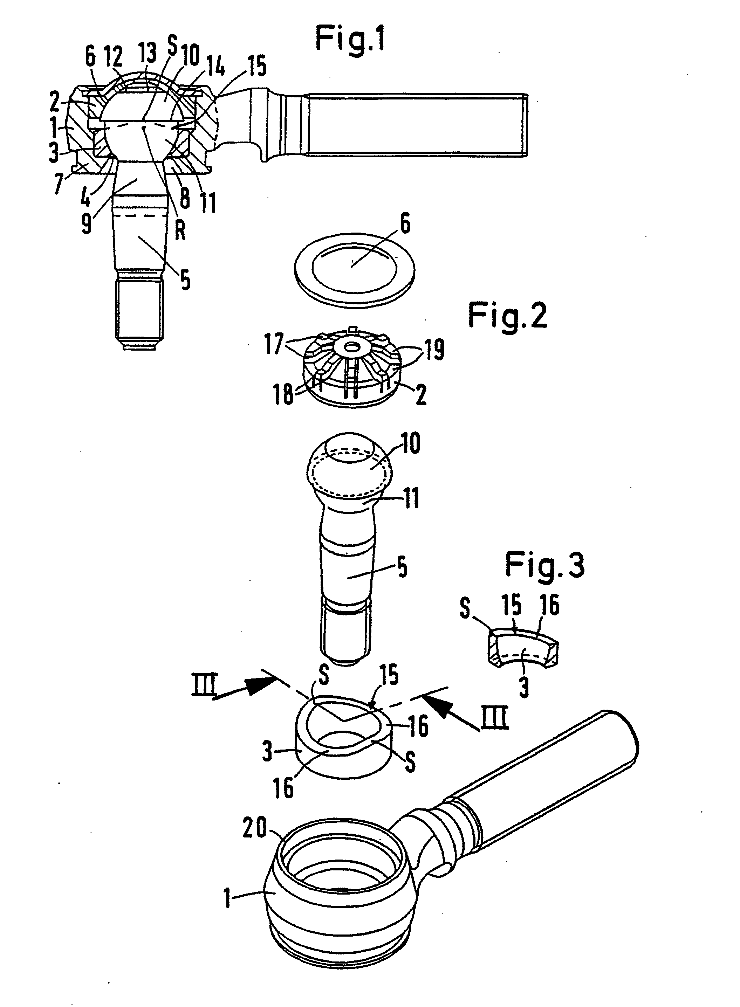

In der Fig. 1 ist ein Kugelgelenk mit einem Gelenkgehäuse 1, einer in diesem gehalterten Lagerschale aus einer inneren Lagerschalenhälfte 2 und einer äußeren Lagerschalenhälfte 3 und einem in den Lagerschalenhälften 2,3 an einem Kugelkopf 4 gelagerten Kugelzapfen 5 dargestellt. Die innere Lagerschalenhälfte 2 ist an einem eingewalzten Gehäusedeckel 6 und die äußere Lagerschalenhälfte 3 ist an einer kugelzapfenseitig umlaufenden Innenstufe 7 abgestützt. Die Innenstufe 7 bildet gleichzeitig den Rand einer Durchtrittsöffnung 8 für den Kugelzapfen 5, dessen konischer Kugelzapfenhals 9 vor einem Auftreffen auf den Rand geschützt ist.

Der Kugelkopf 4 weist einen inneren Kugelabschnitt 10 mit einem großen Radius und einen äußeren Kugelabschnitt 11 mit einem kleinen Radius auf, wobei die Kugelabschnitte 10,11 in den kugelschalenförmigen Lagerschalenhälften 2,3 mit entsprechendem Innenradius gelagert sind. Der innere Kugelabschnitt 10 weist aus fertigungstechnischen Gründen eine Polkappe 12 auf, oberhalb derer in der inneren Lagerschalenhälfte 2 ein Fettreservoir 13 mit einer Füllöffnung angeordnet ist. Die Kugelabschnitte 10,11 haben einen gemeinsamen Mittelpunkt R, um den der Kugelkopf 4 innerhalb der Lagerschalenhälften 2,3 verdrehbar ist.

Zwischen den Kugelabschnitten 10,11 ist ein umlaufender Absatz 14 des Kugelkopfes 4 ausgebildet. Die Schwenkbarkeit des Kugelzapfens 5 ist durch das Auftreffen des Absatzes 14 auf einer Stirnseite 15 der angrenzenden äußeren Lagerschalenhälfte 3 begrenzt. Im Scheitelpunkt S der Stirnseite 15 liegt der Absatz 14 auf der Stirnseite 15 auf. Um 180° versetzt hat die Stirnseite 15 einen weiteren, symmetrisch ausgebildeten Auflagebereich für den Absatz 14 mit einem Scheitelpunkt S.

Die Auflagebereiche der Stirnseiten 15 für den Absatz 14 sind um den Scheitelpunkt S herum so gekrümmt, daß der Absatz 14 bei einer Schwenkbewegung um eine senkrecht zur Zeichenebene durch den Radienmittelpunkt R verlaufende Schwenkachse auf den Auflagebereichen abwälzbar ist. Hierzu weisen die Auflagebereiche einem Krümmungsradius auf, der dem Abstand der Schwenkachse durch den Mittelpunkt R vom Absatz 14 (Strecke R-S) gleich ist. Auf diese Weise wird sichergestellt, daß der Kugelzapfen 5 ausschließlich in der Zeichenebene schwenkbar ist. Dennoch ist sichergestellt, daß der Kugelzapfen 5 in jeder Schwenkstellung um seine Zapfenachse drehbar ist.

Die Stirnseiten 15 weisen sich beidseitig an die einen Krümmungsradius aufweisenden Auflagebereiche anschließende Anschlagebenen auf, die den Schwenkwinkel des Kugelzapfens 5 begrenzen, in dem dieser mit seinem Absatz 14 großflächig an den Anschlagebenen zur Anlage kommt. Bei dem dargestellten Ausführungsbeispiel sind die einen Krümmungsradius aufweisenden Auflagebereiche nur klein und graphisch nicht besonders hervorgehoben, weil der maximale Schwenkwinkel des Kugelzapfens 5 ebenfalls klein ist.

Zur Erläuterung weiterer Einzelheiten des Kugelgelenkes und dessen Zusammenbau wird auf die Fig. 2 und 3 Bezug genommen. Zunächst wird eine äußere Lagerschalenhälfte 3 in ein Gelenkgehäuse 1 eingedrückt, so daß sie unter Vorspannung gehalten ist. Wie in den Fig. 2 und 3 besser erkennbar ist, hat die Stirnseite 15 an die die Scheitelpunkte S enthaltenden und einen Krümmungsradius aufweisenden Auflagebereiche angrenzende Anschlagebenen 16.

In die äußere Lagerschalenhälfte 3 wird ein Kugelzapfen 5 mit einem der Lagerschalenhälfte 3 zugeordneten äußeren Kugelabschnitt 11 eingeführt. Auf den inneren Kugelabschnitt 10 des Kugelzapfens 5 wird sodann eine innere Lagerschalenhälfte 2 aufgesetzt. Die innere Lagerschalenhälfte 2 weist an der dem Gehäusedeckel 6 zugewandten Seite 8 radial verlaufende, rippenförmige Erhebungen 17 auf, die sich bei vollständig zusammengebautem Kugelgelenk an dem Gehäusedeckel 6 abstützen. Neben den Erhebungen 17 sind ebenfalls radial verlaufende Schlitze 18 ausgebildet, zwischen denen sich starre Anschläge 19 befinden. Schließlich wird der Gehäusedeckel 6 auf die innere Lagerschalenhälfte 2 aufgesetzt und durch Einwalzen eines Gehäuserandes 20 befestigt. Hierbei werden die Erhebungen 17 um ein gewisses Maß zusammengedrückt und elastisch vorgespannt. Die maximale Verformung der aus einem elastischen Kunststoff bestehenden inneren Lagerschalenhälfte 2 ist erreicht, wenn die Anschläge 19 an der Innenseite des Gehäusedeckels 6 anliegen.

Bezugszeichenliste

  1 Gelenkgehäuse
  2 Lagerschalenhälfte (innere)
  3 Lagerschalenhälfte (äußere)
  4 Kugelkopf
  5 Kugelzapfen
  6 Gehäusedeckel
  7 Innenstufe
  8 Durchtrittsöffnung
  9 Kugelzapfenhals
  10 Kugelabschnitt (innerer)
  11 Kugelabschnitt (äußerer)
  12 Polkappe
  13 Fettreservoir
  14 Absatz
  15 Stirnseite
  16 Anschlagebene
  17 Erhebung
  18 Schlitz
  19 Anschlag
  20 Gehäuserand

  R Mittelpunkt
  S Scheitelpunkt

## Patentansprüche

1. Kugelgelenk für Übertragungsgestänge in Kraftfahrzeugen mit in ein Gelenkgehäuse (1) eingesetzten Lagerschalen (2,3), in denen ein Kugelzapfen (5) drehbar und zwischen Anschlägen der inneren Lagerschalenhälfte (3) schwenkbar gelagert ist, dadurch gekennzeichnet, daß der einteilig ausgebildete Kugelkopf (4) einen am Kugelzapfen (5) ansetzenden Kugelabschnitt (11) mit kleinerem Radius und einen inneren Kugelabschnitt (10) mit größerem Radius hat, daß die beiden Radien den gleichen Mittelpunkt (R) haben, daß der größere Kugelabschnitt (11) in einer inneren Lagerschalenhälfte (2) gelagert ist und daß ein zwischen den beiden Kugelabschnitten (10,11) ausgebildeter, ringförmiger Absatz (14) mit der äußeren Lagerschalenhälfte (3) des kleineren Kugelabschnittes (11) als Anschlag zusammenwirkt.

2. Kugelgelenk nach Anspruch 1, dadurch gekennzeichnet, daß der ringförmige Absatz (14) des Kugelkopfes (4) in zwei um 180° versetzten Auflagebereichen auf der Stirnseite der Anschläge bildenden Lagerschalenhälfte (3) aufsitzt und daß die Stirnseite (15) in den Auflagebereichen einen Krümmungsradius um eine Schwenkachse des Kugelkopfes (4) hat, der gleich dem Abstand (R–S) der Schwenkachse vom ringförmigen Absatz (14) ist.

3. Kugelgelenk nach Anspruch 2, dadurch gekennzeichnet, daß die einen Krümmungsradius aufweisenden Auflagebereiche der Stirnseite (15) der Anschläge bildenden Lagerschalenhälfte (3) in sich tangential anschließende Anschlagebenen (16) übergehen.

4. Kugelgelenk nach Anspruch 1, dadurch gekennzeichnet, daß zumindest eine Lagerschalenhälfte (2) in Zapfenachsrichtung über eine Feder oder Federn am Gehäusedeckel (6) oder Gehäuseboden abgestützt ist.

5. Kugelgelenk nach Anspruch 4, dadurch gekennzeichnet, daß die Federn von sich am Gehäusedeckel (6) oder Gehäuseboden abstützenden Erhebungen (17) gebildet werden, die sich radial auf der dem Gehäusedeckel (6) oder Gehäuseboden benachbarten Lagerschalenhälfte (2) erstrecken.

6. Kugelgelenk nach Anspruch 5, dadurch gekennzeichnet, daß an die Erhebungen (17) der den Gehäusedeckel (6) oder Gehäuseboden benachbarten Lagerschalenhälfte (2) radial verlaufende Schlitze (18) angrenzen, zwischen denen starre Anschläge (19) ausgebildet sind.

## Claims

1. Ball-and-socket joint for transmission linkages in motor vehicles, which comprises bearing bushes (2, 3) which are inserted into a joint casing (1) and in which a ball pin (5) is mounted for rotation and for swivelling between stops in the inner bearing bush half (3), characterized in that the one-piece ball head (4) has a spherical segment (11) attached to the ball pin (5) and having a smaller radius and an inner spherical segment (10) having a larger radius, that the two radii have the same centre (R), that the larger spherical segment (11) is mounted in an inner bearing bush half (2), and that an annular shoulder (14) formed between the two spherical segments (10, 11) cooperates as a stop with the outer bearing bush half (3) of the smaller spherical segment (11).

2. Ball-and-socket joint according to claim 1, characterized in that the annular shoulder (14) of the ball head (4) rests in two support regions, offset by 180°, on the end face of the bearing bush half (3) forming the the stops, and that the end face (15) has in the support regions a radius of curvature, about a swivelling axis of the ball head (4), which is equal to the distance (R–S) between the swivelling axis and the annular shoulder (14).

3. Ball-and-socket joint according to claim 2, characterized in that on the end face (15) of the bearing bush half (3) forming the stops the support regions which have a radius of curvature merge into tangentially adjoining stop surfaces (16).

4. Ball-and-socket joint according to claim 1, characterized in that at least one bearing bush half (2) is supported on the casing cover (6) or casing bottom, in the direction of the pin axis, by means of one or more springs.

5. Ball-and-socket joint according to claim 4, characterized in that the springs are formed by projections (17) which are supported on the casing cover (6) or casing bottom and extend radially on the bearing bush half (2) adjoining the casing cover (6) or casing bottom.

6. Ball-and-socket joint according to claim 5, characterized in that radially extending slots (18), between which rigid stops (19) are formed, lie adjacent to the projections (17) on the bearing bush half (2) adjoining the casing cover (6) or casing bottom.

## Revendications

1. Articulation à rotule pour timoneries d'automobiles, comportant des demi-coquilles (2, 3) insérées dans un boîtier (1) d'articulation, dans lesquelles un pivot (5) à rotule est logé de façon à pouvoir tourner et à pouvoir pivoter entre les plans de butée de la demi-coquille extérieure (3), caractérisée en ce que la rotule (4) monobloc comporte une section sphérique (11) d'un faible rayon, qui est adjacente au pivot (5) à rotule, et une section sphérique intérieure (10) d'un plus grand rayon, les deux rayons possèdent le même centre (R), la plus grande section sphérique (11) est logée dans une demi-coquille intérieure (2), et un rebord circulaire (14), formé au joint entre les deux sections sphériques (10, 11), coopère avec la demi-coquille extérieure (3) recevant la petite section sphérique (11), de façon à former une butée.

2. Articulation à rotule selon la revendication 1, caractérisée en ce que le rebord circulaire (14) de la rotule (4) repose sur deux portions de support positionnées respectivement à 180° l'une de l'autre sur la face frontale de la demi-coquille (3) formant les plans de butée, et que la face frontale (15) est incurvée, au niveau des portions de support, selon un rayon de courbure, autour d'un axe de pivotement de la rotule (4), qui est égal à la distance (R–S) entre l'axe de pivotement et le rebord circulaire (14).

3. Articulation à rotule selon la revendication 2, caractérisée en ce que les portions de support de la face frontale (15) de la demi-coquille (3) formant des plans de butée, qui sont incurvées selon un rayon de courbure donné, constituent des plans (16) de butée tangentiellement adjacents.

4. Articulation à rotule selon la revendication 1, caractérisée en ce qu'au moins une demi-coquille (2) s'appuie élastiquement sur le couvercle (6) du boîtier ou sur le fond du boîtier, dans la direction du pivot à rotule, par l'intermédiaire d'un ressort ou de ressorts.

5. Articulation à rotule selon la revendication 4, caractérisée en ce que les ressorts sont constitués de bossages (17) prenant appui sur le couvercle (6) du boîtier ou le fond du boîtier, qui s'étendent radialement sur la demi-coquille (2) qui est juxtaposée au couvercle (6) du boîtier ou au fond du boîtier.

6. Articulation à rotule selon la revendication 5, caractérisée en ce que les bossages (17) de la demi-coquille (2) juxtaposée au couvercle (16) du boîtier ou au fond du boîtier sont longés de fentes radiales (18) entre lesquelles s'étendent des butées rigides (19).

EP 0 276 420 B1

# Fig.1

# Fig.2

# Fig.3